# EUROPÄISCHE PATENTSCHRIFT

(11) **EP 1 046 556 B1**
(45) Veröffentlichungstag und Bekanntmachung des Hinweises auf die Patenterteilung: **29.10.2008**
(21) Anmeldenummer: 00108109.0
(22) Anmeldetag: 13.04.2000
(51) Int. Cl.: B60R 25/00, B60R 25/10

(54) **System zur Ansteuerung von Funktionen eines Fahrzeuges, insbesondere Kraftfahrzeuges, vornehmlich von Zentralverriegelung und/oder Diebstahlwarnanlage, durch Fernbedienung**
Control system for vehicle functions, in particular in a motor vehicle and especially for the central locking and/or alarm system by remote control
Système de commande des fonctions d'un véhicule, notamment d'un véhicule à moteur, spécialement pour le système de verrouillage de portes centralisé et/ou l'alarme antivol en utilisant une commande à distance

(30) Priorität: 22.04.1999 DE 19918162
(43) Veröffentlichungstag der Anmeldung: 25.10.2000
(73) Patentinhaber: ADAM OPEL AG, 65423 Rüsselsheim (DE)
(72) Erfinder: Salm, Markus, Dipl.-Ing., 65239 Hochheim (DE)
(74) Vertreter: Daniel, Ulrich W.P.

(56) Entgegenhaltungen:
- EP-A- 0 685 620
- EP-A- 0 789 120
- DE-C- 19 531 279
- US-A- 5 172 094
- US-A- 5 398 532
- US-A- 5 670 831
- US-A- 5 808 372
- US-A- 5 869 908

## Beschreibung

Die Erfindung bezieht sich auf ein System nach dem Oberbegriff des Patentanspruchs 1.

Es ist allgemein bekannter Stand der Technik, die Zentralverriegelung von Kraftfahrzeugen und auch - sofern vorhanden - die Diebstahlwarnanlage mit einem im Gehäusekopf des Zündschlüssels angeordneten Sender fernbedient anzusteuern, wobei die ausgesendeten Steuersignale Funk- oder Infrarotsignale sein können.

Zur manuellen Auslösung der Steuersignale sind am Gehäusekopf des Zündschlüssels geeignete Betätigungselemente, z. B. Drucktasten, vorgesehen. Hierbei sollen Gehäusekopf und Betätigungselemente einerseits eine möglichst lange Lebensdauer aufweisen, andererseits sollen die Betätigungskräfte verringert werden, um die Bedienung der Fernsteuerung zu erleichtern. Eine Reduzierung der Betätigungskräfte bedeutet indessen zugleich eine Erhöhung der Gefahr von Fehlbedienungen durch unbeabsichtigte Betätigung des Betätigungselements (z. B. der Drucktaste). Ein solcher Fall kann beispielsweise dann eintreten, wenn der im Zündschloß befindliche Zündschlüssel in die Ausgangsstellung zurückgedreht und anschließend abgezogen wird.

Durch die DE 195 39 851 C2 ist ein System der eingangs bezeichneten Art gemäß dem Oberbegriff des Anspruchs 1 bekannt geworden, bei dem bei im Zündschloß eingestecktem Schlüssel die fernbediente Ansteuerung blockiert ist, sobald ein fahrberechtigender Schlüssel über eine induktive Schlüssel-Lenkschloß-Kommunikation der Wegfahrsperre erkannt wird. Der Nachteil dieser bekannten Lösung besteht darin, daß die Blockierung von fernbedienten Ansteuerungen nur solange in Kraft ist, wie sich der Schlüssel im Zündschloß befindet. Denn die Kommunikationsfähigkeit induktiver Wegfahrsperrensysteme ist - systembedingt - auf wenige Zentimeter Entfernung beschränkt. Bei der bekannten Lösung können somit ungewollte Fernbedienungsvorgänge auftreten, wenn der Zündschlüssel gerade das Zündschloß verlassen hat. Die Gefahr ungewollter Bedienungen der Fernsteuerung resultiert daraus, daß zum Zurückdrehen des Zündschlüssels im Zündschloß Kräfte aufgebracht werden müssen, die über denen liegen, die zur Betätigung der Betätigungselemente der Fernbedienung erforderlich sind. Diese Kräfte können nicht sofort in dem Moment zurückgenommen werden, in dem der Schlüssel aus dem Zündschloß gezogen wird.
Durch die WO 00/13947 ist des Weiteren ein System der eingangs gemäß dem Oberbegriff des Anspruchs 1 bezeichneten Art bekannt geworden, bei dem die fernbediente Ansteuerung von fahrzeugseitigen Funktionen für kurze Zeit verzögert oder vollständig blockiert ist, sobald ein fahrberechtigter Schlüssel über eine induktive Schlüssel-Lenkschloss-Kommunikation der Wegfahrsperre erkannt wird, um eine unbeabsichtigte Betätigung der fahrzeugseitigen Funktionen beim Anlassen des Motors zu vermeiden.
Durch die US 5,670,831 ist des Weiteren ein System bekannt geworden, welches das Herausziehen eines Zündschlüssels aus dem Zündschloss eines Kraftfahrzeuges bei laufendem Motor ermöglicht. Das Herausziehen des Zündschlüssels ist hierbei nur bei gleichzeitiger Erfüllung verschiedener Sicherheitskriterien möglich und versetzt das Fahrzeug automatisch in einen Schutzmodus, der unter Anderem die Aktivierung der Alarmanlage und das Verschließen der Fahrzeugtüren und Fahrzeugfenster umfasst.

Ausgehend von dem geschilderten Stand der Technik besteht die der Erfindung zugrundeliegende Aufgabe darin, eine Fehlbedienung durch unbeabsichtigte Betätigung der Fernsteuerung beim Herausziehen des Zündschlüssels aus dem Zündschloß zu verhindern.

Gemäß der Erfindung wird die Aufgabe bei einem System der eingangs bezeichneten Gattung durch die kennzeichnenden Merkmale des Patentanspruchs 1 gelöst. Eine vorteilhafte Weiterbildung des Grundgedankens der Erfindung enthält Patentanspruch 2.

Durch die Erfindung werden Fehlbedienungen der Fernsteuerung unmittelbar nach dem Herausziehen des Zündschlüssels aus dem Zündschloß vermieden. Hierdurch wird zugleich eine Konzeption des Zündschlüssel-Gehäusekopfes als zwei Materialienkonstruktion ermöglicht, bei der der Gehäusekopf (Container) als solcher aus hartem und das (die) 15 Betätigungselement(e) (z. B. Drucktasten) aus elastischem Material hergestellt ist (sind). Eine solche zwei Materialien-Konstruktion vereinigt in sich die Vorteile einer leichtgängigen Betätigung und langen Lebensdauer des Gehäusekopfes des Zündschlüssels.

Da das Signal der der Zündschloßposition I entsprechenden Klemme den Steuereinheiten, die die von der Fernbedienung initiierten Ansteuerungen ausführen, bei derzeitigen Systemen der in Rede stehenden Art bereits zur Verfügung stehen, läßt sich die Erfindung ohne zusätzlichen Kostenaufwand realisieren. Die Blockierung der Steuereinheit ist unabhängig davon, ob der Zündschlüssel fahrberechtigend ist. (Der Zündschlüssel muß von der Wegfahrsperre nicht akzeptiert werden.) Dies ist ein Vorteil, z. B. bei Reparaturen, die die Wegfahrsperre oder das Zündschloß betreffen.

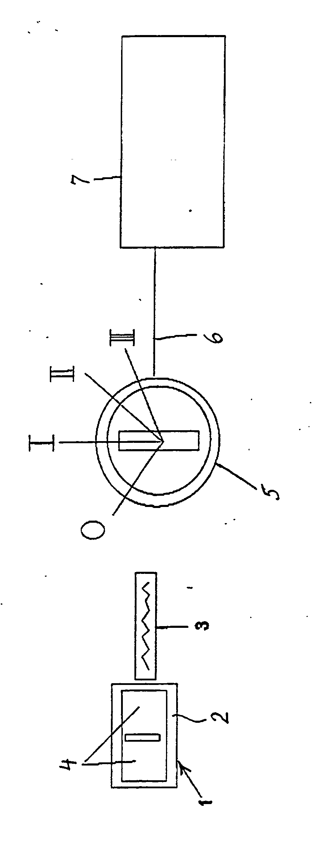

In der Zeichnung ist die Erfindung anhand eines Ausführungsbeispiels veranschaulicht, das im folgenden beschrieben wird. Die Zeichnung zeigt - schematisch in Form eines Blockschaltbildes - eine Ausführungsform eines Systems zur fernbedienten Ansteuerung von Funktionen eines Kraftfahrzeugs.

Es bezeichnet insgesamt 1 einen Zündschlüssel mit Gehäusekopf (Container) 2, Schlüsselbart 3 und Betätigungselementen 4 die z. B. als Drucktasten ausgebildet sein können. Der Gehäusekopf 2 als solcher besteht zweckmäßig aus einem vergleichsweise harten (Kunststoff-) Material, während die Betätigungselemente 4 aus einem eine leichte Bedienung und lange Lebensdauer ermöglichenden weicheren, elastischen (Kunststoff-)Material gefertigt sein sollten. In dem Gehäusekopf 2 ist ein (im einzelnen nicht gezeigter) Sender angeordnet, der geeignete Steuerimpulse, vorzugsweise Funk- oder Infrarotsignale, auszusenden vermag.

Ein fahrzeugseitiges Zündschloß ist mit 5 beziffert. Es weist, wie üblich, mehrere Stell-Positionen auf, die mit 0, I, II und III bezeichnet sind. Die Stellposition "0" bedeutet bei abgezogenem Zündschlüssel 1 blockierte Lenkung bei ausgeschalteter Zündung. Wird der (fahrberechtigende, in das Zündschloß 5 eingesteckte) Zündschlüssel 1 in die Position "I" (sogenannte "Klemme W") gedreht, so wird die Lenkung frei, während die Zündung noch ausgeschaltet bleibt. Bei Weiterdrehen des Zündschlüssels 1 in Position "II" erfolgt die Zündung (bzw. das Vorglühen) der Antriebsmaschine. Der Anlaßvorgang wird schließlich durch Drehen des Zündschlüssels 1 in "Position III" bewirkt.

Das Zündschloß 5 ist durch eine Verkabelung 6 mit einer elektronischen Steuereinheit 7 verbunden, die zur Ansteuerung von Fahrzeugfunktionen, insbesondere einer Zentralverriegelung und/oder einer Diebstahlwarnanlage (nicht dargestellt), dient. Die elektronische Verbindung zwischen Zündschloß 5 und Steuereinheit 7 ist so konzipiert, daß durch Drehen des Zündschlüssels 1 in die Stellposition I an den PIN der Steuereinheit 7 die Batteriespannung gelegt wird, was eine Logik-Anfrage auslöst, die die Steuereinheit 7 bezüglich Fernbedienung deaktiviert.

Bei abgezogenem Zündschlüssel 1 ist die Steuereinheit 7 jedoch zum Empfang von Steuersignalen, die durch Fernbedienung erzeugt werden, aktiviert. Vorliegend handelt es sich hierbei um die Betätigung einer Zentralverriegelung und/oder Diebstahlwarnanlage des betreffenden Fahrzeugs. Zur Auslösung dieser Steuersignale muß eine (bzw. beide) Drucktaste(n) 4 des Zündschlüssels 1 manuell betätigt werden.

Die Besonderheit besteht nun darin, daß nach Abziehen des Zündschlüssels 1 aus dem Zündschloß 5 die vorstehend beschriebene "Normalfunktion" der fernbedienten Ansteuerung der Steuereinheit 7 nicht sofort, sondern erst nach einer gewissen Verzögerung (von z. B. 1,5 Sekunden) möglich ist. Dies wird durch eine Verzögerungsschaltung ermöglicht, die eine (Wieder-)Aktivierung der Steuereinheit 7 erst nach Ablauf der in Rede stehenden Verzögerungszeit zuläßt. Der Beginn der Verzögerungszeit sollte hierbei durch das Abziehen des Zündschlüssels 1 ausgelöst werden.

## Patentansprüche

1. System zur Ansteuerung einer Zentralverriegelung und/oder einer Diebstahlwarnanlage eines Kraftfahrzeuges, mit:
einem Zündschlüssel (1), welcher als Fernbedienung Betätigungselemente (4) und einen durch die Betätigungselemente (4) manuell betätigbaren Sender von Steuersignalen aufweist; und mit
einer fahrzeugseitigen Steuereinheit (7), welche bezüglich der Fernbedienung deaktivierbar und erst nach Abziehen des Zündschlüssels (1) wieder aktivierbar ist;
**dadurch gekennzeichnet,**
**dass** das System eine Verzögerungsschaltung aufweist, welche die Deaktivierung der Steuereinheit (7) auch noch nach Abziehen des Zündschlüssels (1) für eine wählbare Verzögerungszeit aufrecht erhält.

2. System nach Anspruch 1,
**dadurch gekennzeichnet,**
**dass** der Beginn der Verzögerungszeit durch das Abziehen des Zündschlüssels (1) ausgelöst wird.

## Claims

1. System for the activation of a central locking and/or a theft warning device of a motor vehicle, including:
an ignition key (1), which comprises, as a remote control, actuating elements (4) and which comprises a transmitter of command signals manually operable by the actuating elements (4); and including
a command unit on the side of the vehicle (7), which is deactivable in relation to the remote control and which is again activable only after taking off the ignition key (1);
**characterized in that**
the system comprises a delay circuit, which maintains the deactivation of the command unit (7) also after taking off the ignition key (1) for a selectable time lag.

2. System according to claim 1, **characterized in that** the beginning of the time lag is initiated by taking off the ignition key (1).

## Revendications

1. Système de commande d'un verrouillage central et/ou d'une alarme antivol d'une automobile, comprenant :
une clé d'allumage (1), laquelle présente comme télécommande des éléments d'actionnement (4) et un émetteur de signaux de commande activable de façon manuelle par les éléments d'actionnement (4); et comprenant
une unité de contrôle du côté du véhicule (7), laquelle peut être désactivée relativement à la télécommande et peut de nouveau être activée seulement après l'extraction de la clé d'allumage (1) ;
**caractérisé en ce que**
le système présente un circuit de retard qui maintient la désactivation de l'unité de contrôle (7) même après l'extraction de la clé d'allumage (1) pour une période de retard au choix.

2. Système selon la revendication 1, **caractérisé en ce que** le début de la période de retard commence dès l'extraction de la clé d'allumage (1).
